# EUROPEAN PATENT SPECIFICATION

(11) **EP 1 817 260 B1**
(45) Date of publication and mention of the grant of the patent: **25.07.2012**
(21) Application number: 05808426.0
(22) Date of filing: 12.09.2005
(51) Int. Cl.: E03B 3/28, B01D 5/00, C02F 1/02, C02F 1/32

(54) **CIRCULATION-TYPE APPARATUS FOR GENERATING DRINKING WATER**
UMLAUFAPPARATUR ZUR ERZEUGUNG VON TRINKWASSER
APPAREIL DE PRODUCTION D'EAU POTABLE A CIRCULATION

(30) Priority: 08.11.2004 KR 20040090487
(43) Date of publication of application: 15.08.2007
(73) Proprietor: Dongyang Electronics Co., Ltd., Kyunggi-do 415-863 (KR)
(72) Inventor: KIM, Jae Kyung, Kyunggi-do 415-863 (KR)
(74) Representative: Petraz, Gilberto Luigi
(86) International application number: PCT/KR2005/002995
(87) International publication number: WO 2006/049387

(56) References cited:
- JP-A- 2002 153 874
- KR-A- 20000 014 834
- KR-Y1- 200 337 958
- US-A- 5 203 989
- US-A1- 2003 097 763

## Description

**Technical Field**

The present invention relates to an apparatus for generating drinking water, and more particularly, to a circulation-type apparatus for generating drinking water using moisture in the atmosphere, comprising a continuous circulation/repeat sterilization system, in which the generated drinking water is continuously circulated along a desired path so that the drinking water is repeatedly sterilized and purified to prevent multiplication of bacteria in a drinking-water tank, a water collection tank, a cold-water tank, and a hot-water tank, and also prevent a phenomenon of dust flocculation in the drinking-water tank, thereby perfectly securing the safety for sanitary and clean water quality.

**Background Art**

In general, the atmosphere contains a lot of moisture in vapor form, and humidity is a measure of moisture in the air. The humidity is indicated by relative humidity which is a ratio of the amount of water vapor in the saturated air at a specific temperature to the maximum amount that the air could hold at that temperature, and it is often expressed as a percentage.

If the moisture in the air contacts an object of relatively low temperature, the moisture is condensed, and, in turn, is converted into water. This is a phenomenon in that if the air contacts the object of relatively low temperature, the temperature of the air is lowered and the air is converted into a saturated state for the moisture, so that the saturated moisture is condensed.

If the humidity is high, a human body may feel discomfort. Hence, a dehumidifier for eliminating the moisture from the air has been developed and utilized. The dehumidifier includes a compressor for compressing a coolant, a condenser for condensing the compressed coolant, and an evaporator for evaporating and cooling the condensed coolant. When the air passes through the evaporator, the moisture in the air is condensed by the evaporator. Before the dehumidified air is left from the dehumidifier, the air passes through the condenser, and, in turn, is warmed. Then, the warmed air is again discharged to the atmosphere. When the condensed water is cooled by the evaporator, the temperature of the evaporator is raised in a moment to drop the condensed water and then collect it.

As industrialization has been developed rapidly, there is a problem in that it is difficult to purify domestic wastewater and industrial wastewater resulted from industrial complexes located adjacent to rivers using existing physicochemical purifying provisions, in order to generate required domestic water. In particular, heavy metals or chemicals which are not eliminated by a simple purifying device or a chlorinating process are contained in the domestic water as it is. This fact may be presumed by a value of TDS (total dissolved material) indicative of amounts of substances dissolved in the water. Off course, the substances expressed as the value of TDS may be harmful to human body or not. In view of that a value of TDS of tap water in U.S.A. is in the range of about 70 to about 300, the value in some regions of Europe is 500, and the value in some regions of the Middle East is 5000, it seems that as the value of TDS is high, the possibility that harmful substances are added in the water is high.

In theory, if the value of TDS is lowered, since components left in the water are eliminated, it can reduce the possibility of water pollution. Hence, various purifiers are sold, and purifiers employing a reverse osmotic pressure principle can lower the value of TDS to less than 10. However, the purifier employing the reverse osmotic pressure principle has a drawback in that 4 liters of water should be wasted so as to obtain one liter of purified water. Also, most of the purifiers are expensive, as well as the purifier employing the reverse osmotic pressure principle. The purifiers are not known whether the water is purified in the wanted level. In addition, there is a flood of various purifiers having a doubtful function. Consequently, people are on the confines of buying mineral water to drink the water.

As a result, in view that moisture in the atmosphere is clean and pure, a water generating apparatus capable of using the water, which is collected by using a function of a conventional humidifier, as drinking water has been proposed. The water generating apparatus generates the drinking water using the moisture in the atmosphere. Specifically, the water generating apparatus is configured by merely combining the construction of a conventional humidifier with the construction of a conventional purifier, so as to purify the water condensed by the humidifier and, in turn, provide the drinking water.

A conventional water generating apparatus is configured by merely combining the construction of the humidifier including a compressor, a heat exchanger, and a condenser, with a water purifying means including a water tank and a filter, so as to generate the water. It is effective that a temperature difference between the air and the heat exchanger becomes more than 10°C. In particular, in winter when external temperature is below sub-zero temperature, even though the external air directly passes on a surface of the condenser, it is difficult to obtain the condensed water. Therefore, an efficiency of the system is too decreased.

In addition, when the polluted air is condensed intact, various alien substances are mixed therein. Also, since an evaporator is generally made of a copper pipe, direct use of the moisture condensed by the evaporator as drinking water may cause heavy metal and the like to flow in. In other words, there is a problem in that the safety of the generated water may not be guaranteed as the drinking water.

Also, the moisture is frozen on the evaporator at temperature of below 0°C. This freezing must be defrosted, so that the water streams down and is collected. However, the conventional apparatus has the following drawbacks. Since pipes of the evaporator are arranged in a horizontal direction, and aluminum pins are densely disposed for the pipes, the defrosting process is delayed. Hence, since a heating means, such as a heater or a hot blast heater, should be provided, the construction of the apparatus is complicated, and thus a manufacturing cost is increased. Also, additional energy is consumed to operate the heating means. In addition, the process of streaming and collecting the water is not smoothly performed.

In order to solve the above problems, the applicant filed patent applications, for example, Korean Patent Application KR20040031671, entitled "dual drink water generation apparatus".

According to the above patent application, in the case where the moisture in the air is not easily frozen, the drinking water is supplied from the exterior, and the supplied drinking water is purified, thereby continuously supplying the drinking water. Since a surface of the evaporator is coated by Teflon which is not harmful to a human body, the safety of the drinking water is improved, and the collection of water is quickly achieved. Also, pipes are arranged in a vertical direction, and aluminum pins are not disposed for the pipes, thereby naturally defrosting and collecting the water, without applying heat to the pipes.

The above drinking-water generating apparatus for generating and purifying the drinking water in the air is sanitarily managed by a purifying filter system and a sterilizing system. However, a drinking-water tank for storing the purified and sterilized water is under the condition suitable for multiplication of bacteria. In particular, in the case where the drinking water is stagnated, because of small usage, the drinking-water becomes a hotbed of secondary multiplication of bacteria.

In addition, since an ultraviolet sterilizing lamp serves not to sterilize 100% of bacterial, but about 70% of bacteria, the remaining bacteria continuously multiply to cause pollution of the drinking-water tank.

Also, in case of serious air pollution, a phenomenon of dust flocculation which becomes another hotbed of bacteria may occur in a water collecting tank which temporarily stores the water within a period from the water condensing point to the water purifying point.
The prior art document US 2003/0097763 A1 describes a device for generating drinking water in which water is produced by condensing humidity present in ambient air and the collected water is repeatedly purified by filters arranged in a circulation path between two holding tanks.

**Disclosure of the Invention**

Therefore, an object of the present invention is to solve the problems involved in the prior art, and to provide a circulation-type apparatus for generating drinking water using moisture in the atmosphere, comprising a continuous circulation/repeat sterilization system, in which the generated drinking water is continuously circulated along a desired path so that the drinking water is repeatedly sterilized and purified to prevent multiplication of bacteria in a drinking-water tank, a water collection tank, a cold-water tank, and a hot-water tank, and also prevent a phenomenon of dust flocculation in the drinking-water tank, thereby perfectly securing the safety for sanitary and clean water quality.

Another object of the present invention is to provide a circulation-type apparatus for generating drinking water, capable of preventing an electronic valve for supplying auxiliary drinking water from being burned out to improve the reliability of the apparatus.

In order to achieve these and other objects, the present invention provides a circulation-type drinking-water generating apparatus as defined in claim 1.

Brief Description of the Drawings

The above objects, other features and advantages of the present invention will become more apparent by describing the preferred embodiment thereof with reference to the accompanying drawings, in which:

Fig. 1 is a perspective view of a drinking-water generating apparatus according to an embodiment of the present invention.

Fig. 2 is a front cross-sectional view illustrating a drinking-water generating apparatus according to an embodiment of the present invention.

Fig. 3 is a sectional side elevation illustrating a drinking-water generating apparatus according to an embodiment of the present invention.

Fig. 4 is a schematic view illustrating relationship of components of the present invention.

**Best Mode for Carrying Out the Invention**

Reference will now be made in detail to preferred embodiments of the present invention, examples of which are illustrated in the accompanying drawings.

A circulation-type drinking-water generating apparatus according to an embodiment of the present invention will now be described with reference to the accompanying drawings, the circulation-type drinking-water generating apparatus being represented generally by reference numeral 1.

The circulation-type drinking-water generating apparatus 1 according to the present invention continuously circulates water to prevent the water from being stagnated in a drinking-water tank, while repeatedly sterilizing and purifying the water, thereby obtaining clean water quality.

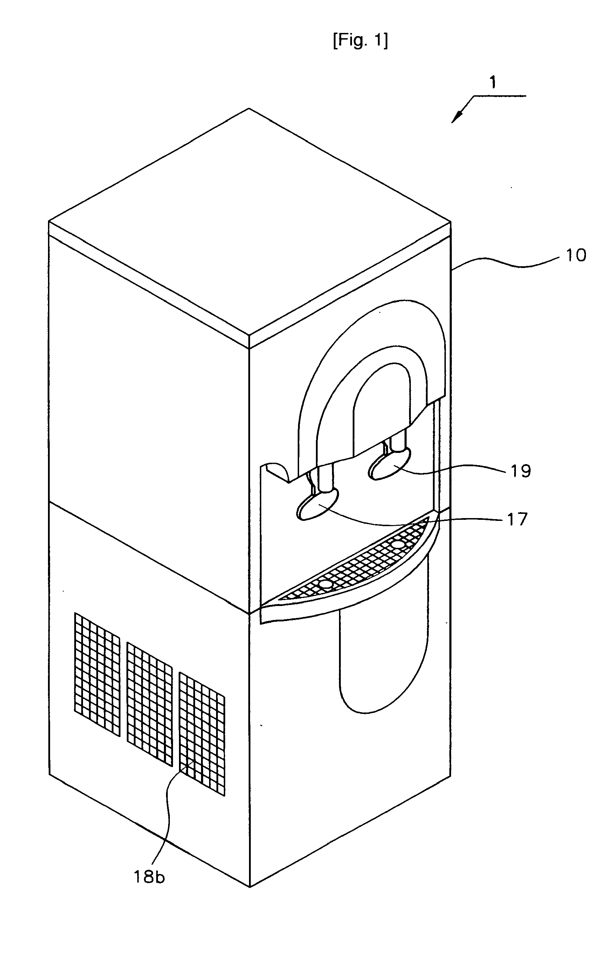

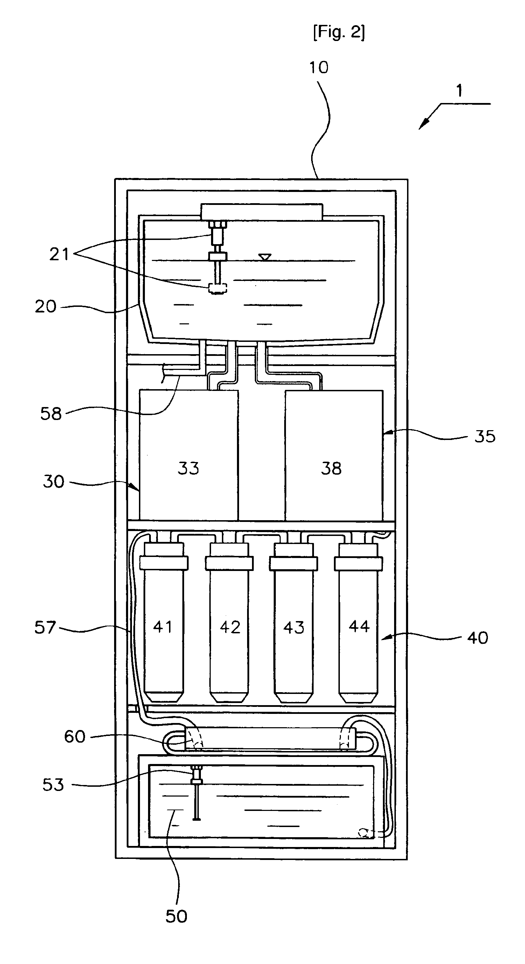

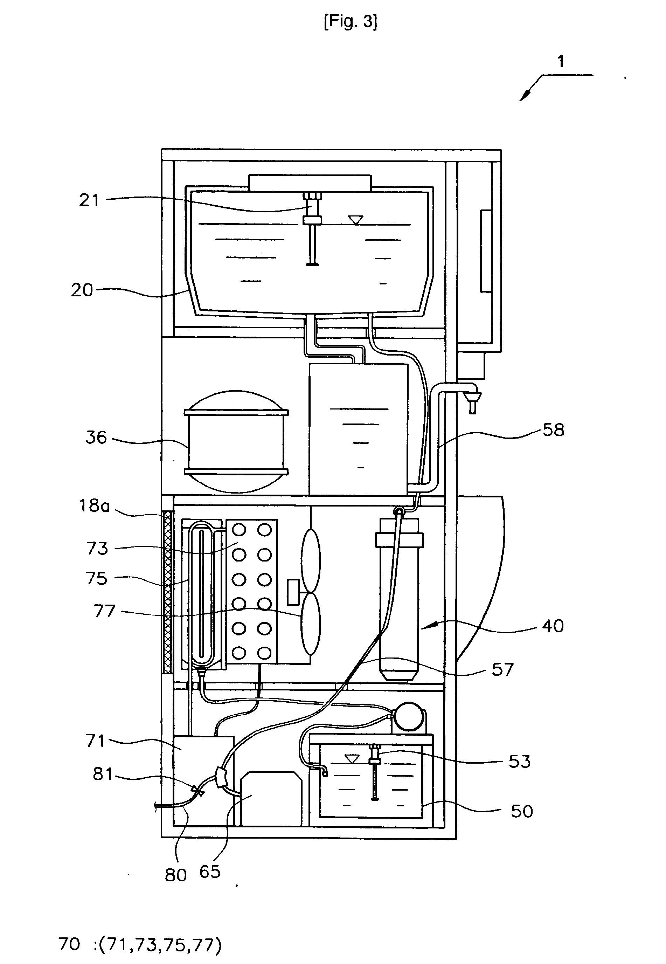

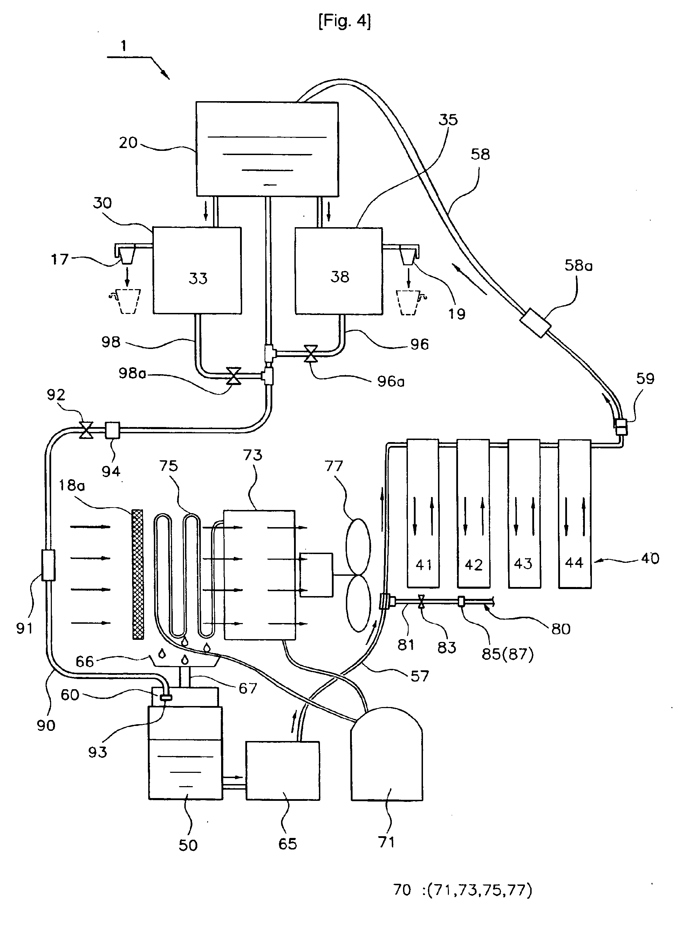

Fig. 1 is a perspective view of a drinking-water generating apparatus according to an embodiment of the present invention, Fig. 2 is a front cross-sectional view of Fig. 1, Fig. 3 is a sectional side elevation of FIG. 1, and Fig. 4 is a schematic view illustrating relationship of components of the present invention.

As shown in Figs. 1 through 4, the circulation-type drinking-water generating apparatus 1 according to the present invention includes a drinking-water freezing system 70 having a fan 77 for supplying air having humidity into a casing 10, an evaporator 75 for condensing the air supplied by the fan 77, a condenser 73 connected to the evaporator 75, and a compressor 71 for compressing a coolant supplied to the evaporator 75 and the condenser 73; a water collecting tank 50 disposed under the evaporator for collecting drinking water condensed on and dropped from a surface of the evaporator; water sterilizing means 60 for sterilizing the drinking water supplied into the water collecting tank 50; a water purifying system 40 for purifying the drinking water collected in the water collecting tank 50; a drinking-water tank 20 for storing the drinking water purified by the water purifying system 40; a water supply pump 65 installed to either of a first water supply pipe 57 passing the water collecting tank 50 with the water purifying system 40 to connect the water collecting tank 20 with the water purifying system 40 and a second water supply pipe 58 for connecting the water purifying system 40 and the drinking-water tank 20; a water heating unit 30 and a water cooling unit 35 for heating and cooling the drinking water supplied from the dinking water tank 20; and a micom (not shown) for controlling operation of the components, in which a return pipe 90 is connected to the drinking-water tank 20 and the water collecting tank 50 for returning the drinking water to the water collecting tank 50, thereby continuously circulating the drinking water.

Preferably, an ultraviolet sterilizing lamp 91 is installed in the return pipe 90.

The ultraviolet sterilizing lamp 91 includes an UV lamp, a transparent vessel for housing the UV lamp, and a sterilizing chamber formed on an outside of the transparent vessel and having a narrow passage for guiding the drinking water passing through the return pipe 90. Also, the return pipe 90 is provided with a reduction valve 92 for reducing a flow rate of the drinking water moved down from the drinking-water tank 20. The reduction valve 92 is disposed above the ultraviolet sterilizing lamp for reducing the flow rate of the supplied drinking water, so that a stagnation time of the drinking water in the ultraviolet sterilizing lamp 91 is prolonged to extend a ultraviolet radiating time and thus improve a sterilizing efficiency.

If a level detection sensor 53 installed in the water collecting tank 50 detects a predetermined level of water, the water supply pump 65 is operated to discharge the water from the water collecting tank to the water purifying system and the drinking-water tank. If the water supply tank 65 is failed, the water may overflow from the water collecting tank.

In order to prevent this, the return pipe 90 is provided with an electronic valve 93 automatically operated when the water collecting tank 50 is filled with the water at a high water level, or a ball-type valve operated by buoyancy when the water collecting tank 50 is filled with the water at a predetermined water level.

The electronic valve 93 is controlled in such a way that the electronic valve is automatically closed in response to a signal output from the level detection sensor 53. In order to provide for failure of the level detection sensor 53, a separate level detection sensor (not shown) may be additionally installed.

The level detection sensor 53 may be configured in a switch type to directly operate the electronic valve when pressure reaches above a predetermined level.

In the state where the water level of the drinking-water tank 20 does not reach a minimum standard amount, it should intercept the water dropping through the return pipe. Preferably, the return pipe 90 is provided on the upper portion thereof with a flow rate detection sensor 94 for detecting hydraulic pressure of the drinking-water tank 20 to control the electronic valve 93. The electronic valve may be connected with the level detection sensor 21 of the drinking-water tank. Also, an ultraviolet sterilizing lamp 58a may be additionally installed in the second water supply pipe 58 through which the drinking water is supplied from the water purifying system 40 to the drinking-water tank 20.

Preferably, the return pipe 90 is connected to the water sterilizing lamp 60 installed on the upper portion of the water collecting tank 50.

If the cooled water is not used for a long time and thus the water is stagnated in the cold-water tank 38, bacteria may multiply in the cold-water tank. In order to prevent this, the return pipe 90 is connected to a cold-water return branch pipe 96 connected to the cold-water tank 38 of the water cooling unit and provided with an electronic valve 96a which is controlled by the micom (see Fig. 4).

The electronic valve 96a of the cold-water return branch pipe 96 is controlled to be opened or closed periodically or in time of low use frequency.

The electronic valve 96a of the cold-water return branch pipe 96 may be opened, for example, during 10 minutes every 4 hours or during 20 minutes in time of low use frequency, i.e., at about 3 a.m.

Also, the electronic valve 96a of the cold-water return branch pipe 96 may be opened or closed during a predetermined time when the night time is detected by an illumination detection sensor.

With the above construction, the water in the cold-water tank 38 is circulated through the return branch pipe 96 and the return pipe 90 periodically or in time of low use frequency. Hence, if the cooled water is not used for a long time, bacteria do not multiply in the cold-water tank.

The water stored in the hot-water tank 33 is sterilized by the heat generated from the heater during operation of the water heating unit 30. However, the hot water is not used in tropical regions such as the Middle East. If the water heating unit is turned off, the hot-water tank becomes a hotbed of the multiplication of bacteria.

In order to prevent this the return pipe 90 is connected to a hot-water return branch pipe 98 connected to the hot-water tank 33 of the water heating unit and provided with an electronic valve 98a which is controlled by the micom (see Fig. 4).

The electronic valve 96a of the hot-water return branch pipe 98 is controlled to be opened or closed periodically when the water heating unit 30 is turned off.

With the above construction, even though the water heating unit is not operated, the water is not stagnated in the hot-water tank, which can prevent multiplication of bacteria.

In order to provide for the emergency where the generation of the drinking water using the moisture in the air is not properly achieved, an auxiliary drinking-water supply means 80 may be provided, the auxiliary drinking-water supply means including an external water supply pipe 81 communicated with the first water supply pipe 57 between the water collecting tank and the water purifying system, and an electronic valve 83 for opening or closing the external water supply pipe 81. When the drinking water is hardly generated, for example, when levels of the drinking-water tank 20 and the water collecting tank 50 are not raised during a predetermined time, or when a temperature difference between temperature of the external air detected by an external-air temperature sensor and temperature of the evaporator 75 detected by an evaporator temperature sensor becomes below 10°C, the electronic valve 83 is automatically opened by the micom, so that the auxiliary drinking-water supply means can supply the drinking water from the exterior through the external water supply pipe 81. Accordingly, in the case where the generation of the drinking water using the moisture in the air is not properly achieved, the supply of drinking water is not interrupted.

Preferably, the external water supply pipe 81 is provided with the electronic valve 83 and means for protecting the electronic valve to control ON/OFF of the electronic valve 83 (see Fig. 4).

The means for protecting the electronic valve has a hydraulic pressure detection sensor 85 of the external water supply pipe 81, and the electronic valve 83 is controlled to intercept the power when the hydraulic pressure detection sensor 85 outputs a lower hydraulic pressure detection signal.

The means for protecting the electronic valve locks the electronic valve 83 in the case where the drinking water is properly generated. When levels of the drinking-water tank 20 and the water collecting tank 50 are not raised during a predetermined time, when a level of the drinking-water tank is lowered below a predetermined level, or when a temperature difference between temperature of the external air detected by an external-air temperature sensor and temperature of the evaporator 75 detected by an evaporator temperature sensor becomes below 10°C, the electronic valve 83 is automatically opened by the micom, so that the drinking water is supplied from the exterior through the external water supply pipe 81.

When the external water is not supplied due to suspension of water supply, lock of a manual valve, or the like, and thus the hydraulic pressure in the external water supply pipe 81 is lowered, the hydraulic pressure detection sensor 85 sends the low hydraulic pressure signal to the micom, so that the micom intercepts the power of the electronic valve 83 to stop the operation of the electronic valve. When the hydraulic pressure in the external water supply tube 81 is returned to a normal level by the hydraulic pressure detection sensor 85, the power is again applied to the electronic valve 83.

Accordingly, since the idling operation of the electronic valve repeated in the state in which the external water is not supported is interrupted, the electronic valve is not burned out due to overheat. In addition, the power of the electronic valve 83 is automatically ON/OFF in accordance with supply or suspension of external water supply, thereby easily maintaining the apparatus and extending a lifetime of the apparatus.

An additional switch 87 may be installed in the electronic valve 83 as the means for protecting the electronic valve. The switch 87 manually interrupts the power of the electronic valve in the case where the external water is not supplied, thereby protecting the electronic valve.

In the accompanying drawings, reference numeral 17 denotes a hot-water supply knob, 18a denotes an air filter, 19 denotes a cold-water supply knob, 33 denotes a hot-water tank, 36 denotes a compressor for cold water, 38 denotes a cold-water tank, 41, 42, 43, and 44 denote a purified-water filter, and 66 denotes a water collecting plate.

Operation of the apparatus according to the present invention will now be described.

When the power is applied, the compressor 71 and the fan 77 of the drinking-water freezing system 70 are operated by the control of the micom, and the evaporator 75 is cooled by operation of the compressor 71. At that time, the moisture in the air supplied into the casing 10 through the filter 18a by the fan 77 is condensed on the surface of the evaporator 75. When the air passes through the evaporator 75, the moisture in the air is taken away, and the temperature of the air is raised. In turn, the air is discharged outwardly through a discharge net 18b. When the compressor 71 is driven during a predetermined time, for example, 50 minutes, and a temperature difference between the external air and the evaporator 75 is above 10°C, a sufficient amount of moisture is condensed on the surface of the evaporator 75. The micom stops the operation of the compressor 71 during about 10 minutes to raise the temperature of the evaporator 75, so that the moisture condensed on the surface of the evaporator 75 is thawed and dropped down. At that time, since the surface of the evaporator 75 is coated with Teflon or other coating material which is not harmful to a human body, a harmful substance is dissolved into the moisture, and a dropping speed of the water is increased by Teflon, so that a speed of collecting the water becomes quick. When the drinking water which is collected by the water collecting plate 66 under the evaporator 75 passes through the ultraviolet sterilizing lamp 60 installed on the upper portion of the water collecting tank 50, the drinking water is sterilized, and, in turn, is stored in the water collecting tank 50. The water collecting tank 50 is gradually filled with the drinking water by repeatedly turning the compressor 71 on/off. If the predetermined level of the water collecting tank 50 is detected by the level detection sensor 53, the micom 50 drives the water supply pump 65. If the water supply pump 65 is driven, the drinking water in the water collecting tank 50 passes through the water purifying system 40, and the purified drinking water is supplied into the dinking-water tank 20. The drinking water of the drinking-water tank is supplied to the hot-water tank 33 and the cold-water tank 38 through a discharge outlet 23. The drinking water contained in the hot-water tank 33 and the cold-water tank 38 is heated and cooled by the heater and the cold-water evaporator, respectively. Hence, the user may operate the hot-water supply knob 17 and/or the cold-water supply knob 19 to discharge the dinking water.

Also, if the water in the drinking-water tank 20 and the water in the water collecting tank 50 reach a predetermined level, respectively, by the proper generation of the drinking water, the micom stops the operation of the compressor 71 to interrupt the condensation and collection of the water. In contrast, when the drinking water is hardly generated, for example, when levels of the drinking-water tank 20 and the water collecting tank 50 are not raised during a predetermined time, when the water in the drinking-water tank 20 is dropped below a predetermined level, or when a temperature difference between temperature of the external air detected by an external-air temperature sensor and temperature of the evaporator 75 detected by an evaporator temperature sensor becomes below 10°C, the drinking-water supply valve 83 is automatically opened by the micom, so that the drinking water may be supplied from the exterior through the external water supply pipe 81. Otherwise, the micom may notify the user of the fact that the drinking water is not automatically generated, so that the user can select a dual selection button.

The operation of the apparatus according to the present invention is substantially identical to that of the above patent applications filed by the applicant, except for the following featured operation of the present invention.

The drinking water is dropped toward the water collecting tank 50 from the drinking-water tank 20 through the return pipe 90, and is continuously circulated in the course of the drinking-water tank 20, the return pipe 90, the water collecting tank 50, the water supply tank 65, the first water supply pipe 57, the water purifying system 40, the second water supply pipe 58, and the drinking-water tank 20. In the case where a small amount of the drinking water is discharged through the water cooling unit 35 and the water heating unit 30, the water is not stagnated in the drinking-water tank 20, but is continuously circulated. Also, the drinking water passes through the ultraviolet sterilizing lamps 91 and 58a installed in the return pipe 90 and the second water supply pipe 58 and the filters 41, 42, 43, and 44 of the water purifying system 40 in the circulating course, so that the drinking water is repeatedly sterilized and purified, thereby obtaining the clean and sanitary water quality.

In addition, since the reduction valve 92 is installed in the return pipe 90, the water passes through the ultraviolet sterilizing lamp 91 at very slowly speed, so that the staying time of the drinking water in the sterilizing chamber is prolonged to maximize the sterilizing efficiency. The circulation system is repeatedly operated during 24 hours, and the circulating period may be adjusted by the reduction valve 92.

Also, since the electronic valve 93 is installed on the connection between the water collecting tank 50 of the return pipe 90, when the water in the water collecting tank 50 reaches a predetermined level, for example, due to the failure of the water supply pump 65, the return pipe 90 is interrupted to stop the inflow of the water and thereby to secure the safety.

Even though the level and pressure in the drinking-water tank are lowered by abruptly increased usage of the drinking water, and are detected as a minimum standard level by the flow rate detection sensor 94 or the level detection sensor 21, the electronic valve is closed. After the water is filled to a predetermined standard level, the electronic valve is opened.

Also, the cold-water tank and the hot-water tank are provided with the return branch pipes 96 and 98, respectively, so as to perform the stagnation preventive circulation, thereby achieving the sanitary management of the drinking water.

The circulation-type drinking-water generating apparatus includes the continuous circulation/repeat sterilization system, in which the generated drinking water is continuously circulated along a desired path so that the drinking water is repeatedly sterilized and purified to prevent multiplication of bacteria in the drinking-water tank and the water collection tank and also prevent a phenomenon of dust flocculation in the drinking-water tank, thereby obtaining the sanitary drinking water. Also, the present invention prevents the electronic valve for the auxiliary drinking-water supply means from being burned out, thereby improving the reliability of the apparatus.

Industrial Applicability

With the above description, according to the embodiments of the present invention, the circulation-type apparatus for generating drinking water using moisture in the atmosphere includes a continuous circulation/repeat sterilization system, in which the generated drinking water is continuously circulated along a desired path so that the drinking water is repeatedly sterilized and purified to prevent multiplication of bacteria in a drinking-water tank, a water collection tank, a cold-water tank, and a hot-water tank, and also prevent a phenomenon of dust flocculation in the drinking-water tank, thereby perfectly securing the safety for sanitary and clean water quality.

Also, the present invention prevents the electronic valve for the auxiliary drinking-water supply means from being burned out, thereby improving the reliability of the apparatus.

## Claims

1. A circulation-type drinking-water generating apparatus (1) comprising; a drinking-water freezing system (70) having a fan (77) for supplying air having humidity into a casing (10), an evaporator (75) for condensing the air supplied by the fan (77), a condenser (73) connected to the evaporator (75), and a compressor (71) for compressing a coolant supplied to the evaporator (75) and the condenser (73); a water collecting tank (50) disposed under the evaporator for collecting drinking water condensed on and dropped from a surface of the evaporator; water sterilizing means (60) for sterilizing the drinking water supplied into the water collecting tank (50); a water purifying system (40) for purifying the drinking water collected in the water collecting tank (50); a drinking-water tank (20) for storing the drinking water purified by the water purifying system (40); a water supply pump (65) instiled to either of a first water supply pipe (57) passing the water collecting tank (50) with the water purifying system (40) to connect the water collecting tank (20) with the water purifying system (40) and a second water supply pipe (58) for connecting the water purifying system (40) and the drinking-water tank (20); a water heating unit (30) and a water cooling unit (35) for heating and cooling the drinking water supplied from the drinking water tank (20); and a micom for controlling operation of the components, in which a return pipe (90) is connected to the drinking water tank (20) and the water collecting tank (50) for returning the drinking water to the water collecting tank (50), thereby continuously circulating the drinking water, wherein the return pipe (90) is connected to a cold-water return branch pipe (96) connected to the cold-water tank (38) of the water cooling unit and provided with an electronic valve (96a) which is controlled by the Micom, and wherein the return pipe (90) is connected to a hot-water return branch pipe (98) connected to the hot-water tank (33) of the water heating unit and provided with an electronic valve (98a) which is controlled by the micom.

2. The apparatus as claimed in claim 1, wherein an ultraviolet sterilizing lamp (91) is installed in the return pipe (90).

3. The apparatus as claimed in claim 2, wherein the return pipe (90) is provided with a reduction valve (92) for reducing a flow rate of the drinking water moved down from the drinking-water tank (20).

4. The apparatus as claimed in claim 1 or 2, wherein the return pipe (90) is provided with an electronic valve (93) operated at a high water level of the water collecting tank (50) or a reduced storage of the drinking-water tank (20).

5. The apparatus as claimed in claim 1 or 2, wherein the return pipe (90) is provided on an upper portion thereof with a flow rate detection sensor (94) for detecting hydraulic pressure of the drinking-water tank (20) to control the electronic valve (93).

6. The apparatus as claimed in claim 4, wherein the electronic valve (93) is automatically closed in response to a signal output from a level detection sensor (53) installed in the water collecting tank (50) or an additional level detection sensor.

7. The apparatus as claimed in claim 1, wherein an ultraviolet sterilizing lamp is additionally installed in the second water supply pipe (58) through which the drinking water is supplied from the water purifying system (40) to the drinking- water tank (20).

8. The apparatus as claimed in claim 1, wherein the return pipe (90) is connected to the water sterilizing lamp (60) installed on the upper portion of the water collecting tank (50).

9. The apparatus as claimed in claim 1, wherein the electronic valve (96a) of the cold-water return branch pipe (96) is controlled to be opened or closed periodically or in time of low use frequency.

10. The apparatus as claimed in claim 1, wherein the electronic valve (96a) of the cold-water return branch pipe (96) is opened or closed during a predetermined time when a night time is detected by an illuminatian detection sensor.

11. The apparatus as claimed in claim 1, wherein the electronic valve (96a) of the hot-water return branch pipe (98) is controlled to be opened or closed periodically when the water heating unit (30) is turned off.

12. The apparatus as claimed in claim 1, further comprising an auxiliary drinking- water supply means (80) is provided, the auxiliary drinking-water supply means including an external water supply pipe (81) communicated with the first water supply pipe (57) between the water collecting tank and the water purifying system, and an electronic valve (83) for opening or closing the external water supply pipe (81), and means for protecting the electronic valve to control ON/OFF of the electronic valve (83).

13. The apparatus as claimed in claim 12, wherein the means for protecting the electronic valve has a hydraulic pressure detection sensor (85) of the external water supply pipe (81), and the electronic valve (83) is controlled to intercept a power when the hydraulic pressure detection sensor (85) outputs a lower hydraulic pressure detection signal.

14. The apparatus as claimed in claim 12, wherein an additional switch (87) is installed in the electronic valve (83) as the means for protecting the electronic valve.

## Patentansprüche

1. Zirkulationstyp-Trinkwassererzeugungsvorrichtung (1), umfassend:
- ein Trinkwassergefriersystem (70), welches ein Gebläse (77) zum Zuführen von Feuchtigkeit aufweisender Luft in ein Gehäuse (10), einen Verdampfer (75) zum Kondensieren der durch das Gebläse (77) zugeführten Luft, einen mit dem Verdampfer (75) verbundenen Kondensator (73) und einen Kompressor (71) zum Komprimieren eines dem Verdampfer (75) und dem Kondensator (73) zugeführten Kühlmittels aufweist;
- einen unter dem Verdampfer angeordneten Wassersammeltank (50) zum Sammeln von Trinkwasser, das an einer Oberfläche des Verdampfers kondensiert und von dort abgetropft ist;
- Wassersterilisationsmittel (60) zum Sterilisieren des dem Wassersammeltank (50) zugeführten Trinkwassers;
- ein Wasserreinigungssystem (40) zum Reinigen des in dem Wassersammeltank (50) gesammelten Trinkwassers;
- einen Trinkwassertank (20) zum Speichern des von dem Wasserreinigungssystem (40) gereinigten Trinkwassers;
- eine Wasserzuführpumpe (65), die an einer von einer ersten Wasserzuführleitung (57), die durch den Wassersammeltank (50) mit dem Wasserreinigungssystem (40) geht, um den Wassersammeltank (20) mit dem Wasserreinigungssystem (40) zu verbinden, und einer zweiten Wasserzuführleitung (58) zum Verbinden des Wasserreinigungssystem (40) und des Trinkwassertanks (20) installiert ist;
- eine Wassererwärmeinheit (30) und eine Wasserkühleinheit (35) zum Erwärmen und Kühlen des von dem Trinkwassertank (20) zugeführten Trinkwassers; und
- eine Micom zum Regeln/Steuern eines Betriebs der Komponenten,
wobei eine Rückführleitung (90) mit dem Trinkwassertank (20) und dem Wassersammeltank (50) verbunden ist, um Trinkwasser zu dem Wassersammeltank (50) zurückzuführen, wodurch das Trinkwasser kontinuierlich zirkuliert wird, wobei die Rückführleitung (90) mit einer Kaltwasser-Rückführabzweigleitung (96) verbunden ist, die mit dem Kaltwassertank (38) der Wasserkühleinheit verbunden und mit einem elektronischen Ventil (96a) versehen ist, welches von der Micom geregelt/gesteuert wird, und wobei die Rückführleitung (90) mit einer Heißwasser-Rückführabzweigleitung (98) verbunden ist, die mit dem Heißwassertank (33) der Wassererwärmeinheit verbunden und mit einem elektronischen Ventil (98a) versehen ist, welches von der Micom geregelt/gesteuert wird.

2. Vorrichtung nach Anspruch 1, wobei eine Ultraviolett-Sterilisationslampe (91) in der Rückführleitung (90) installiert ist.

3. Vorrichtung nach Anspruch 2, wobei die Rückführleitung (90) mit einem Reduzierventil (92) zum Reduzieren einer Strömungsrate des von dem Trinkwassertank (20) nach unten bewegten Trinkwassers versehen ist.

4. Vorrichtung nach Anspruch 1 oder 2, wobei die Rückführleitung (90) mit einem elektronischen Ventil (93) versehen ist, welches bei einem hohen Wasserpegel des Wassersammeltanks (50) oder einer reduzierten Speicherung des Trinkwassertanks (20) betrieben wird.

5. Vorrichtung nach Anspruch 1 oder 2, wobei die Rückführleitung (90) an einem oberen Abschnitt davon mit einem Strömungsraten-Detektionssensor (94) zum Detektieren hydraulischen Drucks des Trinkwassertanks (20) versehen ist, um das elektronische Ventil (93) zu regeln/steuern.

6. Vorrichtung nach Anspruch 4, wobei das elektronische Ventil (93) automatisch in Reaktion auf eine Signalausgabe eines in dem Wassersammeltank (50) installierten Pegeldetektionssensors (53) oder eines zusätzlichen Pegeldetektionssensors geschlossen wird.

7. Vorrichtung nach Anspruch 1, wobei eine Ultraviolett-Sterilisationslampe zusätzlich in der zweiten Wasserzuführleitung (58) installiert ist, durch welche das Trinkwasser dem Trinkwassertank (20) von dem Wasserreinigungssystem (40) zugeführt wird.

8. Vorrichtung nach Anspruch 1, wobei die Rückführleitung (90) mit der an dem oberen Abschnitt des Wassersammeltanks (50) installierten Wassersterilisationslampe (60) verbunden ist.

9. Vorrichtung nach Anspruch 1, wobei das elektronische Ventil (96a) der Kaltwasser-Rückführabzweigleitung (96) geregelt/gesteuert wird, um periodisch oder zu einer Zeit niedriger Nutzungsfequenz geöffnet oder geschlossen zu werden.

10. Vorrichtung nach Anspruch 1, wobei das elektronische Ventil (96a) der Kaltwasser-Rückführabzweigleitung (96) während einer vorbestimmten Zeit geöffnet oder geschlossen wird, wenn durch einen Beleuchtungsdetektionssensor eine Nachtzeit detektiert wird.

11. Vorrichtung nach Anspruch 1, wobei das elektronische Ventil (96a) der Heißwasser-Rückführabzweigleitung (98) geregelt/gesteuert wird, um periodisch geöffnet oder geschlossen zu werden, wenn die Wassererwärmeinheit (30) ausgeschaltet ist.

12. Vorrichtung nach Anspruch 1, ferner umfassend unterstützende Trinkwasserzuführmittel (80), die bereitgestellt sind, wobei die unterstützenden Trinkwasserzuführmittel eine Zuführleitung (81) für externes Wasser, die mit der ersten Wasserzuführleitung (57) zwischen dem Wassersammeltank und dem Wasserreinigungssystem kommuniziert, und ein elektronisches Ventil (83) zum Öffnen oder Schließen der Zuführleitung (81) für externes Wasser umfasst, und Mittel zum Schützen des elektronischen Ventils, um AN/AUS des elektronischen Ventils (83) zu regeln/steuern.

13. Vorrichtung nach Anspruch 12, wobei die Mittel zum Schützen des elektronischen Ventils einen Hydraulikdruck-Detektionssensor (85) der Zuführleitung (81) für externes Wasser aufweisen und das elektronische Ventil (83) geregelt/gesteuert wird, um eine Energieversorgung zu unterbrechen, wenn der Hydraulikdruck-Detektionssensor (85) ein niedrigeres Hydraulikdruck-Detektionssignal ausgibt.

14. Vorrichtung nach Anspruch 12, wobei ein zusätzlicher Schalter (87) in dem elektronischen Ventil (83) als die Mittel zum Schützen des elektronischen Ventils installiert ist.

## Revendications

1. Appareil de production d'eau potable à circulation (1) comprenant : un système de réfrigération d'eau (70) ayant un ventilateur (77) destiné à amener de l'air chargé d'humidité dans un caisson (10), un évaporateur (75) destiné à condenser l'air amené par le ventilateur (77), un condenseur (73) raccordé à l'évaporateur (75), et un compresseur (71) destiné à comprimer un liquide de refroidissement amené à l'évaporateur (75) et au condenseur (73) ; un réservoir de récupération d'eau (50) placé sous l'évaporateur et destiné à récupérer l'eau potable condensée à la surface de l'évaporateur et s'en écoulant ; un moyen de stérilisation d'eau (60) destiné à stériliser l'eau potable amenée dans le réservoir de récupération d'eau (50) ; un système de purification d'eau (40) destiné à purifier l'eau potable récupérée dans le réservoir de récupération d'eau (50) ; un réservoir d'eau potable (20) destiné à stocker l'eau potable purifiée par le système de purification d'eau (40) ; une pompe d'amenée d'eau (65) installée soit sur un premier tuyau d'amenée d'eau (57) passant par le réservoir de récupération d'eau (50) associé au système de purification d'eau (40), pour raccorder le réservoir de récupération d'eau (20) au système de purification d'eau (40), soit sur un second tuyau d'amenée d'eau (58) destiné à raccorder le système de purification d'eau (40) au réservoir d'eau potable (20) ; une unité de chauffage d'eau (30) et une unité de refroidissement d'eau (35) destinées respectivement à chauffer et refroidir l'eau potable arrivant du réservoir d'eau potable (20) ; et un micom destiné à contrôler le fonctionnement des composants,
appareil dans lequel un tuyau de retour (90) est raccordé au réservoir d'eau potable (20) et au réservoir de récupération d'eau (50) afin de renvoyer l'eau potable au réservoir de récupération d'eau (50), en assurant ainsi une circulation continue de celle-ci, dans lequel le tuyau de retour (90) est raccordé à un tuyau de dérivation de retour d'eau froide (96) raccordé au réservoir d'eau froide (38) de l'unité de refroidissement d'eau et muni d'un robinet électronique (96a) commandée par le micom, et dans lequel le tuyau de retour (90) est raccordé à un tuyau de dérivation de retour d'eau chaude (98) raccordé au réservoir d'eau chaude (33) de l'unité de chauffage d'eau et muni d'un robinet électronique (98a) commandé par le micom.

2. Appareil selon la revendication 1, dans lequel une lampe de stérilisation aux ultraviolets (91) est installée dans le tuyau de retour (90).

3. Appareil selon la revendication 2, dans lequel le tuyau de retour (90) est muni d'un robinet détendeur (92) destiné à réduire le débit de l'eau potable descendant du réservoir d'eau potable (20).

4. Appareil selon la revendication 1 ou 2, dans lequel le tuyau de retour (90) est muni d'un robinet électronique (93) qui est actionné en cas de niveau élevé du réservoir de récupération d'eau (50) ou de faible niveau du réservoir d'eau potable (20).

5. Appareil selon la revendication 1 ou 2, dans lequel le tuyau de retour (90) est muni dans sa partie supérieure d'un débitmètre (94) destiné à détecter la pression hydraulique du réservoir d'eau potable (20) pour commander le robinet électronique (93).

6. Appareil selon la revendication 4, dans lequel le robinet électronique (93) est automatiquement fermé en réponse à un signal émis par un capteur de niveau (53) installé dans le réservoir de récupération d'eau (50), ou par un capteur de niveau supplémentaire.

7. Appareil selon la revendication 1, dans lequel une lampe de stérilisation aux ultraviolets est en outre installée dans le second tuyau d'amenée d'eau (58), par lequel l'eau potable est amenée du système de purification d'eau (40) au réservoir d'eau potable (20).

8. Appareil selon la revendication 1, dans lequel le tuyau de retour (90) est raccordé à la lampe de stérilisation aux ultraviolets (60) installée sur la partie supérieure du réservoir de récupération d'eau (50).

9. Appareil selon la revendication 1, dans lequel le robinet électronique (96a) du tuyau de dérivation de retour d'eau froide (96) est commandé de manière à s'ouvrir ou à se fermer périodiquement, ou en cas d'usage peu fréquent.

10. Appareil selon la revendication 1, dans lequel le robinet électronique (96a) du tuyau de dérivation de retour d'eau froide (96) s'ouvre ou se ferme pendant une durée prédéfinie, lorsqu'un capteur de luminosité détecte qu'il fait nuit.

11. Appareil selon la revendication 1, dans lequel le robinet électronique (96a) du tuyau de dérivation de retour d'eau chaude (98) est commandé de manière à s'ouvrir ou à se fermer périodiquement lorsque l'unité de chauffage d'eau (30) est éteinte.

12. Appareil selon la revendication 1, comprenant en outre un moyen auxiliaire d'amenée d'eau potable (80) - ce dernier comprenant un tuyau d'amenée d'eau extérieure (81) communiquant avec le premier tuyau d'amenée d'eau (57) situé entre le réservoir de récupération d'eau et le système de purification d'eau-, un robinet électronique (83) destiné à ouvrir ou fermer le tuyau d'amenée d'eau extérieure (81), ainsi qu'un moyen de protection de la fonction marche/arrêt du robinet électronique (83).

13. Appareil selon la revendication 12, dans lequel le moyen de protection du robinet électronique comporte un capteur de pression hydraulique (85) du tuyau d'amenée d'eau extérieure (81), et dans lequel le robinet électronique (83) est commandé de manière à couper une tension d'alimentation électrique lorsque le capteur de pression hydraulique (85) émet un signal de détection d'une faible pression hydraulique.

14. Appareil selon la revendication 12, dans lequel un contacteur supplémentaire (87) est installé dans le robinet électronique (83) à titre de moyen de protection de ce dernier.
